# EUROPEAN PATENT SPECIFICATION

(11) **EP 2 763 369 B1**
(45) Date of publication and mention of the grant of the patent: **12.08.2020**
(21) Application number: 12835208.5
(22) Date of filing: 19.06.2012
(51) Int. Cl.: H04L 29/06, H04L 29/08, H04M 7/00, H04L 12/58

(54) **METHOD AND SYSTEM FOR TELECOM NETWORK PROVIDING SESSION SERVICE TO INTERNET**
VERFAHREN UND SYSTEM FÜR EIN TELEKOMMUNIKATIONSNETZ ZUR BEREITSTELLUNG EINES SITZUNGSDIENSTES FÜR DAS INTERNET
PROCÉDÉ ET SYSTÈME PERMETTANT À UN RÉSEAU DE TÉLÉCOMMUNICATION D'OFFRIR UN SERVICE DE SESSION À INTERNET

(30) Priority: 29.09.2011 CN 201110291064
(43) Date of publication of application: 06.08.2014
(73) Proprietor: ZTE Corporation, Shenzhen, Guangdong 518057 (CN)
(72) Inventor: GAO, Yang, Shenzhen Guangdong 518057 (CN); MU, Lingjiang, Shenzhen Guangdong 518057 (CN)
(74) Representative: Ligi, Stefano
(86) International application number: PCT/CN2012/077160
(87) International publication number: WO 2013/044649

(56) References cited:
- CN-A- 101 155 096
- CN-A- 101 540 807
- CN-A- 102 347 950
- US-A1- 2008 304 495
- US-A1- 2009 093 237
- US-A1- 2009 161 843
- US-A1- 2011 072 144
- US-A1- 2011 122 774
- WU/KOSKELAINEN/SCHULZRINNE/CHEN COLUMBIA UNIVERSITY: "Use of SIP and SOAP for Conference Floor Control; draft-wu-sipping-floor-control-02.txt", 20021104, no. 2, 4 November 2002 (2002-11-04), XP015037010, ISSN: 0000-0004
- Anonymous: "Session Initiation Protocol", , 27 September 2011 (2011-09-27), XP055155394, Retrieved from the Internet: URL:http://en.wikipedia.org/w/index.php?ti tle=Session_Initiation_Protocol&oldid=4526 65570 [retrieved on 2014-11-27]

## Description

### TECHNICAL FIELD

The disclosure relates to technology of converging a telecom network and an internet, and in particular to a method and system for a telecom network to provide a session service to an internet.

### BACKGROUND

An Internet Protocol (IP) Multimedia Subsystem (IMS) is a development direction of future multimedia communication, and is also the most important part of a Next Generation Network (NGN). The IMS is a subsystem supporting an IP multimedia service and proposed by a Third Generation Partnership Project (3GPP), and a remarkable feature of the IMS is that a Session Initial Protocol (SIP) system is adopted and communication is independent of an access way. The IMS may have multiple capacities, such as the capacity of separating multiple multimedia service control functions and a bearing capacity, the capacity of separating a call and a session, the capacity of separating an application and a service, the capacity of separating traffic and a network, and the capacity of converging a mobile network and an internet.

The IMS provides a new multimedia service form, provides more services for users, and opens up a new income source for operators. Multimedia services of the IMS include Voice over Internet Protocol (VoIP), Presence, Push-to-Talk over Cellular (PoC), InstantMessage, VideoSharing, content sharing, RichCall and the like. In addition, under an enterprise's fixed environment, the IMS can also provide a service similar to existing fixed switching, for example, by an IPCentrex server, and the IMS can provide a enterprise switchboard service to implement inner-enterprise's short numbers interworking. By an IPConference server, the IMS can provide a conference call service to enable a cell phone, a Personal Computer (PC) and a traditional telephone to dial in the same system, so as to implement a conference call.

In the current industry background, mobile operators, fixed operators, and mobile/fixed mixture operators have the possibility of convergence in roles first. That is, a mobile operator may become a mobile/fixed mixture operator, and a fixed operator may obtain a mobile operating licence, and so on. Therefore, all telecom operators urgently need technology to converge a mobile network and a fixed network together. And the IMS exactly has such characteristic. The IMS is independent of a specific bearing type, and may provide a consecutive service of IMS traffic (for example, from voice to multimedia data) for an arbitrary IP channel. The IMS also has an interworking capability with a traditional network, which enables an IMS terminal to implement interworking with a traditional mobile terminal and a traditional fixed terminal.

A converged network will bring users new service experience. No matter what the access network and terminal devices are, users can obtain the same voice and multimedia service in the same way. As such, the compatibility of mobility and individuation is achieved.

Nowadays, many famous internet service providers have achieved great success by providing a user-to-user communication service, such as MSN, QQ and Skype. The provided services mainly include VoIP, instant messaging, video chat and on the like. Obviously, these applications have a great impact on existing telecom operators' voice and information services. However, at the same time, if these internet applications are transplanted to a mobile terminal, it is also a new traffic opportunity for telecom operators. And the IMS can provide such technical means. The IMS can provide services, such as VoIP, instant messaging and video chat, which may either replace or interwork with the above internet services. Therefore, in the face of internet service providers, telecom operators may have multiple solutions because of the IMS: creating their own brands, competing with the internet, and implementing the interworking cooperation or choosing competition together with cooperation.

Currently, the internet is a general trend of information communication, and internet applications of the internet have the integration characteristic. For example, social applications like Facebook and Google+, integrate a variety of functions, such as IM, Web2.0, Blog, audio and video chat, and audio and video conference. And telecom network (e.g., the IMS) can also provide similar services. The telecom network should open the session service to the internet applications so as to provide users with a broader range of services.

US-A-2011/0122774 discusses time or condition-based reestablishment of a secure connection.

US-A-2009/0093237 discusses a technique for providing interoperability between different protocol domains.

US 2009/0161843 discusses delayed multimedia session.

### SUMMARY

In view of the above, the disclosure is intended to provide a method and system for a telecom network to provide a session service to an internet, so as to enable the telecom network to provide the session service to users.

To this end, the technical solutions of the disclosure are implemented as follows.

A method for a telecom network to provide a session service to an internet is provided, the method includes:
upgrading an access-side device of the telecom network to support an internet application protocol, wherein the telecom network is connected with the internet via the access-side device, the telecom network is Internet Protocol Multimedia Subsystem, IMS, and comprises a Session Border Controller, SBC, a Proxy Call Session Control Function entity, P-CSCF, and a Serving Call Session Control Function entity, S-CSCF, the access-side device is the SBC, and the internet application protocol is a Hypertext Markup Language 5, HTML5 protocol;
an internet user establishes a session with a telecom user or another internet user through the telecom network;
the operation that an internet user establishes a session with a telecom user or another internet user through the telecom network may include: the internet user initiates a session request, and/or, receives a session request;
the operation that the internet user initiates a session request may include: the internet user initiates a session request to the SBC under the HTML5 protocol; the SBC forwards the session request to the P-CSCF under the HTML5 protocol; the P-CSCF encapsulates the session request as a SIP message and forwards the SIP message to the S-CSCF; and the S-CSCF calls the telecom user or said another internet user, and returns a call success message;
the operation that the internet user receives a session request may include: after receiving a call request directed to the internet user, the S-CSCF forwards the call request to the P-CSCF corresponding to the internet user; the P-CSCF converts the call request in the format of INVITE into a call message of the HTML5 protocol and forwards said call message to the SBC; the SBC transparently transmits the call message of the HTML5 protocol to the internet user; and the internet user responds to the call message to establish a session with the telecom user or said another internet user who initiates the call request.

Preferably, the internet user may establish the session with the telecom user or the another internet user using Real-Time Communication in WEB-browsers (RTCWeb) technology, a Session Initial Protocol Plugin (SIP Plugin), or the HTML5.

Preferably, the telecom network may allocate a number or an identifier to the internet user, wherein the number or identifier allocated by the telecom network may be different from a user name of the internet user in an internet application; or, the user name of the internet user in the internet application may be taken as the number or the identifier of the internet user in the telecom network, and
the internet user may register with the telecom network and/or initiate a session request using the number or identifier or the user name of the internet user in the internet application, and/or the internet user may receive a session request, so as to establish the session with the telecom user or the another internet user.

Preferably, a number or an identifier of the internet user in the telecom network may be associated with a user name of the internet user in an internet application, and
the telecom network may call an internet user terminal or a telecom terminal preferentially through service control, or the telecom network may perform a forking call on the internet user terminal and the telecom terminal.

Preferably, the operation that the internet user registers with the telecom network using the number or identifier may include:
the internet user initiates a registration request to the SBC under the HTML5 protocol;
the SBC forwards the registration request to the P-CSCF under the HTML5 protocol;
the P-CSCF encapsulates the registration request as a Session Initial Protocol (SIP) message, and forwards the SIP message to a Serving Call Session Control Function entity (S-CSCF); and
the S-CSCF completes the registration of the internet user, and returns a registration success message.

A system for a telecom network to provide a session service to an internet is provided, wherein the system includes the internet and the telecom network:
wherein the telecom network is an Internet Protocol Multimedia Subsystem, IMS and comprises a Session Border Controller, SBC, a Proxy Call Session Control Function entity, P-CSCF, and a Serving Call Session Control Function entity, S-CSCF,
the internet is connected with the telecom network via an access-side device which has been upgraded to support an internet application protocol; the access-side device is the SBC, and the internet application protocol is the Hypertext Markup Language 5, HTML5 protocol;
the telecom network is configured to provide a session service to an internet user and establish a session between the internet user and a telecom user or between the internet user and another internet user; wherein
wherein the SBC is configured to receive a session request initiated by the internet user under the HTML5 protocol, and forward the session request to the P-CSCF under the HTML5 protocol; the P-CSCF is configured to encapsulate the session request as a SIP message, and forward the SIP message to the S-CSCF; the S-CSCF is configured to call the telecom user or said
another internet user, and return a call success message;
and/or,
wherein the S-CSCF is configured to forward, after receiving a call request directed to the internet user, the call request to the P-CSCF corresponding to the internet user; the P-CSCF is configured to convert the call request in the format of INVITE into a call message of the HTML5 protocol and to forward said call message to the SBC; the SBC is configured to transparently transmit the call message of the HTML5 protocol to the internet user.

Preferably, the internet user may establish the session with the telecom user or the another internet user through Real-Time Communication in WEB-browsers (RTCWeb) technology, a Session Initial Protocol Plugin (SIP Plugin), the HTML5.

Preferably, the telecom network may be further configured to allocate a number or an identifier to the internet user, wherein the number or identifier allocated by the telecom network is different from a user name of the internet user in an internet application; or, the user name of the internet user in the internet application may be taken as the number or the identifier of the identifier of the internet user in the telecom network, and
the internet user may register with the telecom network and/or initiate a session request using the number or identifier or the user name of the internet user in the internet application, and/or the internet user may receive a session request, so as to establish the session with the telecom user or the another internet user.

Preferably, the telecom network may be configured to associate a number or an identifier of the internet user in the telecom network with a user name of the internet user in an internet application, and
the telecom network may be configured to call an internet user terminal or a telecom terminal preferentially through service control, or perform a forking call on the internet user terminal and the telecom terminal.

In the disclosure, the access-side device of the telecom network is upgraded to enable the access-side device to support the internet application protocol, and the internet with the telecom network are converged, thereby providing the session service to the internet user. The disclosure facilitates the internet user to use the session service.

### BRIEF DESCRIPTION OF THE DRAWINGS

Fig. 1 shows an architecture diagram of an internet user acting as a caller according to an embodiment of the disclosure;
Fig. 2 shows an architecture diagram of an internet user acting as a callee according to an embodiment of the disclosure;
Fig. 3 shows an architecture diagram of a conference in which an internet user participates according to an embodiment of the disclosure;
Fig. 4 shows an architecture diagram of an internet user accessing the telecom network according to an embodiment of the disclosure;
Fig. 5 shows another architecture diagram of an internet user accessing the telecom network according to an embodiment of the disclosure;
Fig. 6 shows a flowchart of internet user registration according to an embodiment of the disclosure;
Fig. 7 shows a flowchart of an internet user calling through the telecom network according to an embodiment of the disclosure;
Fig. 8 shows a flowchart of an internet user being called according to an embodiment of the disclosure;
Fig. 9 shows a flowchart of the telecom network dispatching a new number for an internet user according to an embodiment of the disclosure;
Fig. 10 shows another flowchart of the telecom network dispatching a new number for an internet user according to an embodiment of the disclosure;
Fig. 11 shows a flowchart of registering a user name in an internet application according to an embodiment of the disclosure;
Fig. 12 shows a flowchart of calling a user name in an internet application according to an embodiment of the disclosure;
Fig. 13 shows a flowchart of preferentially using an internet session client according to an embodiment of the disclosure;
Fig. 14 shows a flowchart of preferentially using a telecom terminal according to an embodiment of the disclosure; and
Fig. 15 shows a flowchart of performing a forking call on an internet session client and a telecom terminal according to an embodiment of the disclosure.

### DETAILED DESCRIPTION

The basic idea of the disclosure is that: the access-side device of the telecom network is upgraded to enable the access device to support the internet application protocol, and thus the internet and the telecom network are converged, thereby providing a session service to an internet user.

In the disclosure, the telecom network includes but is not limited to an IMS, an NGN, a softswitch network.

The session service includes but is not limited to audio calls, video calls, various value-added telecom services, various supplementary telecom services, audio conferences, video conferences, Instance Message (IM), a whiteboard application, file transmission, and remote control.

In the system for a telecom network to provide a session service to an internet of the disclosure, the internet is connected with the telecom network via an access gateway or via an access-side device which has been upgraded to support an internet application protocol.

The telecom network is configured to provide a session service to an internet user and establish a session between the internet user and a telecom user or between the internet user and another internet user.

The internet user establishes the session with the telecom user or the another internet user through Real-Time Communication in WEB-browsers (RTCWeb) technology, a Session Initial Protocol Plugin (SIP Plugin), or a Hyper Text Transport Protocol (HTTP)/a Simple Object Access Protocol (SOAP)/Web2.0/a Hypertext Markup Language 5 (HTML5).

The telecom network is further configured to allocate a number or an identifier to the internet user, and the allocated number or identifier is different from a user name of the internet user in an internet application; or, the user name of the internet user in the internet application is taken as the number or the identifier of the identifier of the internet user in the telecom network, and
the internet user registers with the telecom network and/or initiates a session request using the allocated number or identifier or the user name of the internet user in the internet application, and/or the internet user receives a session request, so as to establish the session with the telecom user or the another internet user.

The telecom network associates a number or an identifier of the internet user in the telecom network with a user name of the internet user in an internet application, and
the telecom network calls an internet user terminal or a telecom terminal preferentially through service control, or performs a forking call on the internet user terminal and the telecom terminal.

The access-side device is an SBC or a P-CSCF, and
the internet application protocol is the HTTP/SOAP/Web2.0/HTML5 protocol.

The operation that the internet user registers with the telecom network using the allocated number or identifier includes:
the internet user initiates a registration request to the SBC under the HTTP/SOAP/Web2.0/HTML5 protocol;
the SBC forwards the registration request to the P-CSCF under the HTTP/SOAP/Web2.0/HTML5 protocol;
the P-CSCF encapsulates the registration request as an SIP message and forwards the SIP message to a Serving Call Session Control Function entity (S-CSCF); and
the S-CSCF completes the registration of the internet user and returns a registration success message.

The operation that the internet user initiates a session request using the allocated number or identifier includes:
the internet user initiates a session request to the SBC under the HTTP/SOAP/Web2.0/HTML5 protocol;
the SBC forwards the session request to the P-CSCF under the HTTP/SOAP/Web2.0/HTML5 protocol;
the P-CSCF encapsulates the session request as an SIP message and forwards the SIP message to an S-CSCF; and
the S-CSCF calls a callee, and returns a call success message.

The operation that the internet user receives a session request includes:
after receiving a call request directed to the internet user, an S-CSCF forwards the call request to the P-CSCF corresponding to the internet user;
the P-CSCF converts the call request in the format of INVITE into the call message of the HTTP/SOAP/Web2.0/HTML5 protocol;
the SBC transparently transmits the call message of the HTTP/SOAP/Web2.0/HTML5 protocol to the internet user; and
the internet user responses to the call message, so as to establish a session with a caller who initiates the call request.

Related network elements in the system for a telecom network to provide a session service to an internet of the disclosure are further elaborated below in combination with the drawings.

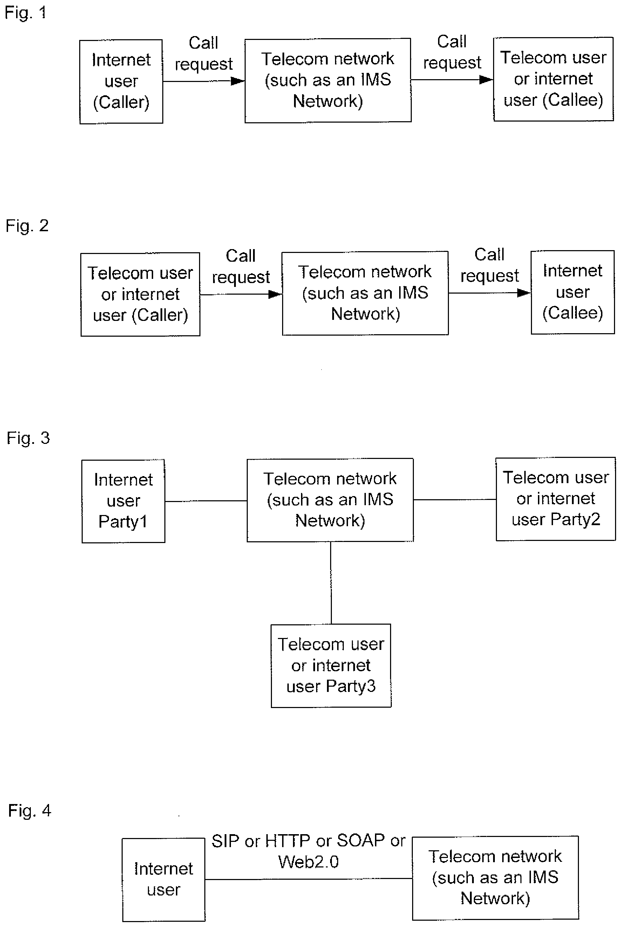

Fig. 1 shows an architecture diagram of an internet user acting as a caller according to an embodiment of the disclosure. As illustrated in Fig. 1, the internet user uses the session service provided by the telecom network, acts as a caller and establishes a session with a callee. The callee may be a telecom user or an internet user.

Fig. 2 shows an architecture diagram of an internet user acting as a callee according to an embodiment of the disclosure. As illustrated in Fig. 2, the internet user uses the session service provided by the telecom network, acts as a callee, and may receive a call request from a caller and establish a session. The caller may be a telecom user or an internet user.

Fig. 3 shows an architecture diagram of a conference in which an internet user participates according to an embodiment of the disclosure. As illustrated in Fig. 3, the internet user uses the session service provided by the telecom network, acts as a participant of the conference function, and implements an audio/video/whiteboard conference. The conference initiator (the conference chairman) may be a telecom user or an internet user. The internet user may initiate the conference or may be invited to attend the conference.

Fig. 4 shows an architecture diagram of an internet user accessing the telecom network according to an embodiment of the disclosure. As illustrated in Fig. 4, the internet session client, as a part of an internet application, may use the following technologies to implement registration, initiate a session request and receive a session request:
using the RTCWeb technology to implement registration, initiate a session request and receive a session request; or
using a plug-in of a Web Browser to provide an SIP function, so as to initiate an SIP registration, initiate a session request and receive a session request; or
using a protocol (such as an HTTP/SOAP/Web2.0 protocol) to implement registration, initiate a session request and receive a session request; or using a plug-in of the HTTP/SOAP/Web2.0, or a standardized Hypertext Markup Language HTML5.

The internet session client may be implemented based on software or a Web Browser, or is downloaded from a server to a browser.

The internet user may access the telecom network using the SIP, HTTP, SOAP, Web2.0 protocols or another protocol.

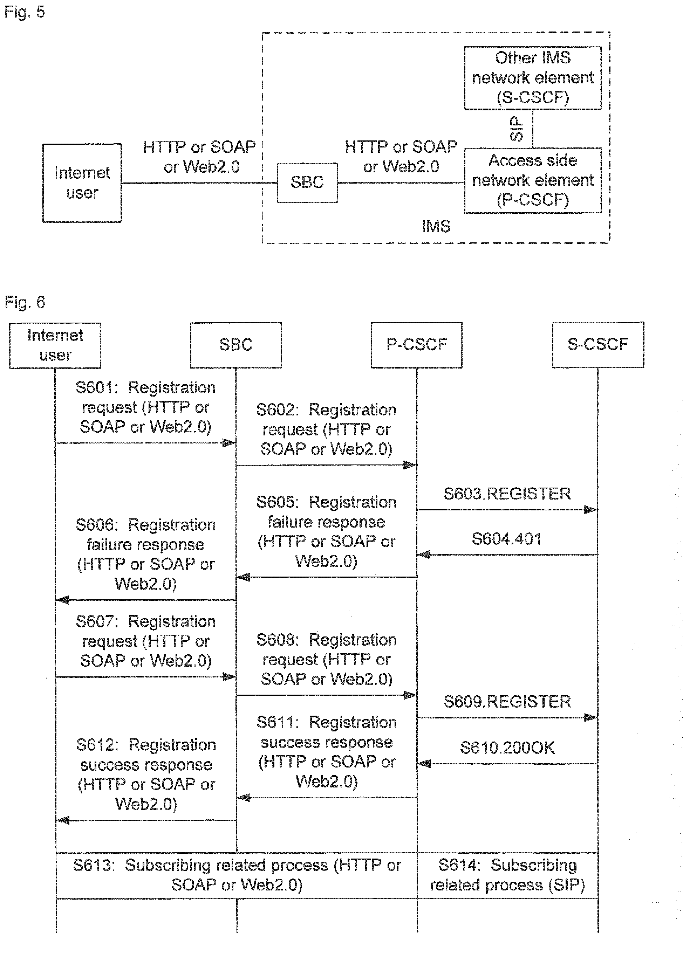

Fig. 5 shows another architecture diagram of an internet user accessing the telecom network according to an embodiment of the disclosure. As illustrated in Fig. 5, for the internet user accessing the telecom network using protocols except the SIP protocol, an enhanced requirement is needed for the telecom network. The specific requirement is that the access-side device of the telecom network needs to support the corresponding protocol for a related network element accessing the telecom network. For example, when an internet user accesses the IMS using the protocol such as the HTTP, SOAP, or Web2.0 protocol, the access-side device (such as network elements like the SBC and the P-CSCF) of the IMS needs to support the protocol such as the SIP, HTTP, SOAP, or Web2.0 protocol. The IMS accesses a device (such as the P-CSCF), and provides the conversion mapping of protocol such as the HTTP, SOAP, or Web2.0 protocol and the SIP protocol (a flow, registration, and call are needed in the embodiment).

In the disclosure, a new number is dispatched to the internet user in the telecom network (e.g., the IMS), and the number or identifier (e.g., a PSTN, an MSISDN, a Tel URI and an SIP URI) is different from the user name (e.g., an account of Fackbook or Taobao) of the internet user in an original internet application. There is no special requirement for the user management of the telecom network (e.g., the IMS), but the internet application is needed to associate the telecom network number (or identifier) with the internet application account.

Alternatively, the user name (e.g., the account of Fackbook or Taobao) of the internet user in an internet application is used to register and call in the IMS. That is, the IMS supports the user name (which may have a non SIP URI or Tel URI format) of the internet application account.

Alternatively, the user name (e.g., the account of Fackbook or Taobao) of the internet user in an internet application is used to register and call in the IMS. That is, the IMS supports the user name (which may have a non SIP URI or Tel URI format) of the internet user in the internet application.

Alternatively, an existing number or identifier (e.g., a PSTN, an MSISDN, a Tel URI and an SIP URI) of the internet user in the telecom network is allowed to be associated with the user name (e.g., the accounts of Fackbook or Taobao) of the internet user in the internet application. The telecom network may transmit the call to the internet or telecom terminal preferentially by service control (e.g., the MMTel AS of the IMS), and provide a supplementary service function (such as call forwarding on no reply) or a forking call (the mechanism of Forking). The telecom network number (or identifier) is associated with the account of the internet application by the internet application.

Specific applications of the convergence of the internet and the telecom network are elaborated below.

Fig. 6 shows a flowchart of internet user registration according to an embodiment of the disclosure. As illustrated in Fig. 6, the flow of the internet user registration in the embodiment includes the following steps:
S601: an internet user initiates a registration request, using the HTTP or SOAP or Web2.0 protocol;
S602: an SBC forwards the registration request, using the HTTP or SOAP or Web2.0 protocol;
S603: a P-CSCF converts the registration message of the HTTP or SOAP or Web2.0 protocol into SIP REGISTER;
S604: an S-CSCF returns 401, with security challenge;
S605: the P-CSCF converts 401 into a registration failure response of the HTTP or SOAP or Web2.0 protocol;
S606: the SBC forwards the registration failure response of the HTTP or SOAP or Web2.0 protocol;
S607: the internet user re-initiates a registration request, using the HTTP or SOAP or Web2.0 protocol, including the authentication to the security challenge;
S608: the SBC forwards the registration request, using the HTTP or SOAP or Web2.0 protocol;
S609: the P-CSCF converts the registration message of the HTTP or SOAP or Web2.0 protocol into SIP REGISTER;
S610: the S-CSCF returns 2000K;
S611: the P-CSCF converts 200OK into a registration success response of the HTTP or SOAP or Web2.0 protocol;
S612: the SBC forwards the registration success response of the HTTP or SOAP or Web2.0 protocol;
S613: the internet user initiates a subscription (HTTP or SOAP or Web2.0 protocol) process; and
S614: the P-CSCF is converted into an SIP subscription.

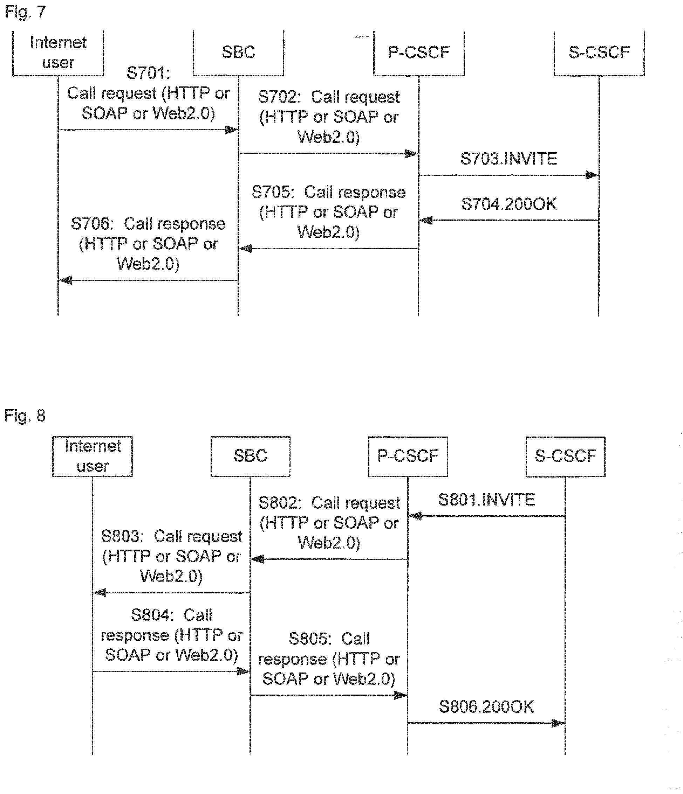

Fig. 7 shows a flowchart of an internet user calling through the telecom network according to an embodiment of the disclosure. As illustrated in Fig. 7, the flow of the internet user calling through the telecom network in the embodiment includes the following steps:
S701: the internet user initiates a call request, using the HTTP or SOAP or Web2.0 protocol;
S702: an SBC forwards the call request, using the HTTP or SOAP or Web2.0 protocol;
S703: a P-CSCF converts the call message of the HTTP or SOAP or Web2.0 protocol into SIP INVITE;
S704: an S-CSCF returns 2000K;
S705: the P-CSCF converts 200OK into a call success response of the HTTP or SOAP or Web2.0 protocol;
S706: the SBC forwards the call success response of the HTTP or SOAP or Web2.0 protocol.

Fig. 8 shows a flowchart of an internet user being called according to an embodiment of the disclosure. As illustrated in Fig. 8, the flow of the internet user acting as a callee in the embodiment includes the following steps:
S801: the internet user receives a call request, and an S-CSCF sends INVITE to a P-CSCF corresponding to the internet user;
S802: a P-CSCF converts the INVITE into a call message of the HTTP or SOAP or Web2.0 protocol;
S803: an SBC transparently transmits the call message of the HTTP or SOAP or Web2.0 protocol;
S804: the internet user returns 2000K;
S805: the SBC transparently transmits a call success response message of the HTTP or SOAP or Web2.0 protocol; and
S806: the P-CSCF converts the call success response message of the HTTP or SOAP or Web2.0 protocol into 200OK.

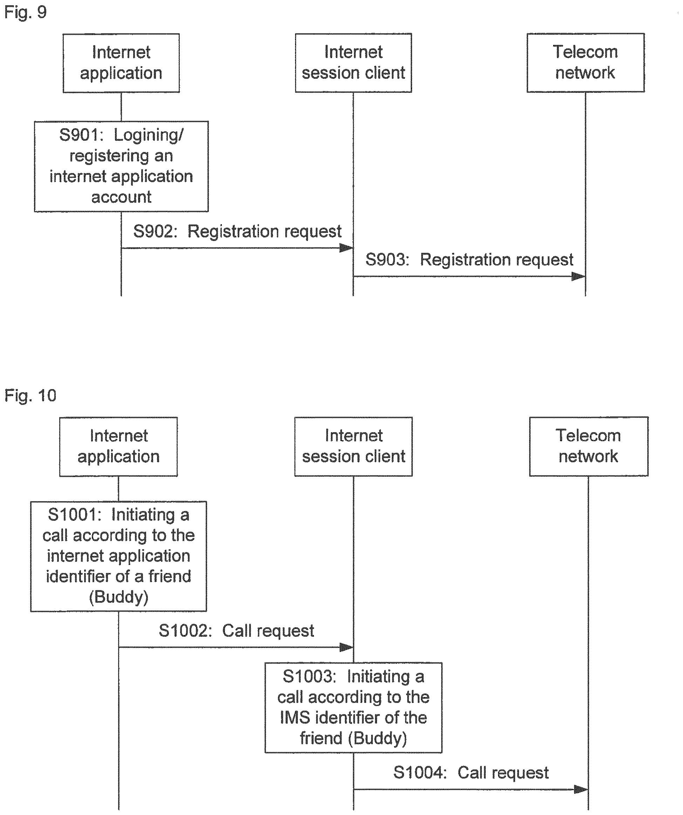

Fig. 9 shows a flowchart of the telecom network dispatching a new number for an internet user according to an embodiment of the disclosure. As illustrated in Fig. 9, the telecom network dispatching a new number for an internet user in the embodiment specifically includes:
S901: an internet application account is logged in or registered;
S902: an internet session client is triggered to initiate a registration request to the telecom network; and
S903: the internet session client initiates a registration request to the telecom network using a telecom network identifier.

Fig. 10 shows another flowchart of the telecom network dispatching a new number for an internet user according to an embodiment of the disclosure. As illustrated in Fig. 10, the telecom network dispatching a new number for an internet user in the embodiment specifically includes:
S1001: an internet application initiates a call according to the internet application identifier of a friend (Buddy), for example, the Facebook or Taobao initiates a call according to the identifier of the friend;
S1002: an internet session client is triggered to initiate a call request to the telecom network; and
S1003: the internet session client initiates a call request according to the IMS identifier of the friend (Buddy).

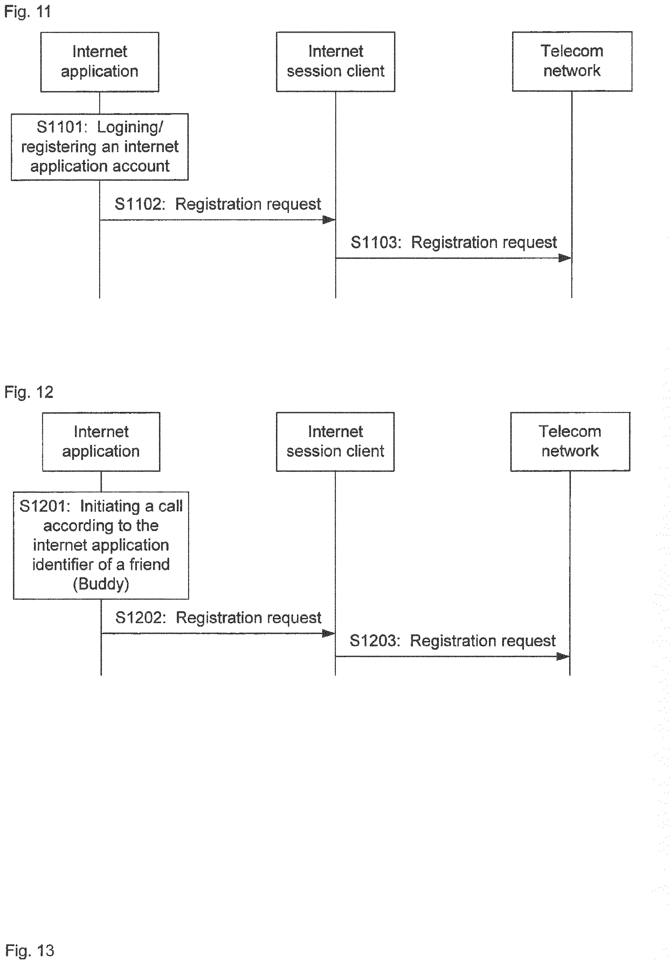

Fig. 11 shows a flowchart of user name registration in an internet application according to an embodiment of the disclosure. As illustrated in Fig. 11, the flow of registering a user name in the internet application in the embodiment includes:
S1101: an internet application account is logged in or registered;
S1102: an internet session client is triggered to initiate a registration request to the telecom network; and
S1103: the internet session client initiates a registration request to the telecom network using internet application identification; at the moment, the telecom network is required to support the internet application identification, such as dispatching a number, registration, authentication and management.

Fig. 12 shows a flowchart of calling a user name in an internet application according to an embodiment of the disclosure. As illustrated in Fig. 12, the flow of calling a user name in an internet application in the embodiment includes:
S1201: an internet application initiates a call according to the internet application identifier of a friend (Buddy), for example, the Facebook or Taobao initiates a call according to the identifier of the friend;
S1202: an internet session client is triggered to initiate a call request to the telecom network; and
S1203: the internet session client initiates a call request according to the internet application identifier of the friend (Buddy).

In the embodiment, the flow of registering or initiating a call using an existing number or identifier of the telecom network is the same as that of dispatching a new number for an internet user in the telecom network (such as the IMS).

Fig. 13 shows a flowchart of preferentially using an internet session client according to an embodiment of the disclosure. As illustrated in Fig. 13, the flow of preferentially using an internet session client in the embodiment includes:
S1301: Both a telecom terminal and an internet session client may register with the telecom network. The user identifier receives a call, and the telecom network preferentially selects the internet according to a domain selection strategy. Further, the domain selection may be combined with a registration state, for example, if the internet session client is not registered or is busy, the call is sent to the telecom terminal; or, the internet session client does not respond, the call is sent to the telecom terminal.
S1302: The telecom network routes the call to the internet session client.

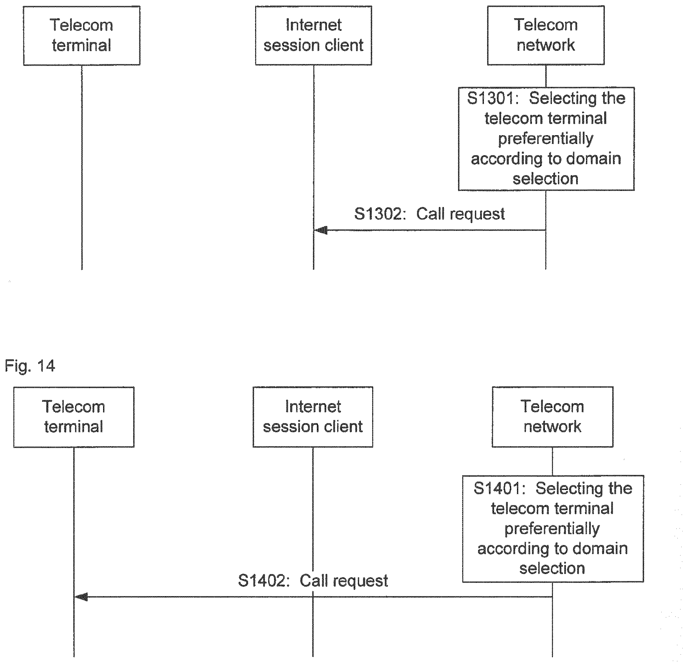

Fig. 14 shows a flowchart of preferentially using a telecom terminal according to an embodiment of the disclosure. As illustrated in Fig. 14, the flow of preferentially using a telecom terminal in the embodiment includes:
S1401: Both a telecom terminal and an internet session client may register with the telecom network. The user identifier receives a call, and the telecom network preferentially selects the telecom terminal according to a domain selection strategy. Further, the domain selection may be combined with the registration state, for example, if the telecom terminal is not registered or is busy, the call is sent to the internet session client; or, the telecom terminal does not respond, the call is sent to the internet session client.
S1402: The telecom network routes the call to the telecom terminal.

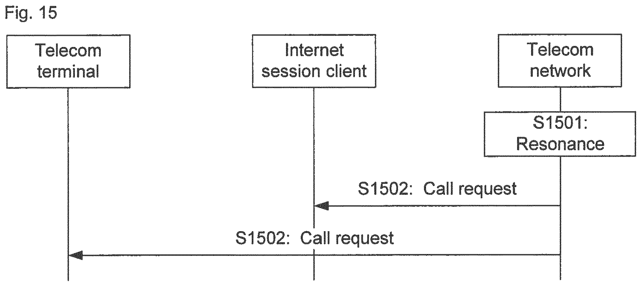

Fig. 15 shows a flowchart of performing a forking call on an internet session client and a telecom terminal according to an embodiment of the disclosure. As illustrated in Fig. 15, the flow of performing a forking call on an internet session client and a telecom terminal in the embodiment includes:
S1501: Both a telecom terminal and an internet session client may register with the telecom network. The user identifier receives a call, and the telecom network initiates resonance to simultaneously call the telecom terminal and the internet session client. The technologies used in resonance may include Forking, a forking call initiated by the AS and the like.
S1502: The telecom network routes the call to the telecom terminal and the internet session client.

The above are merely preferable embodiments of the disclosure, but are not intended to limit the scope of protection of the claims of the disclosure.

### INDUSTRIAL APPLICABILITY

In the disclosure, the access-side device of the telecom network is upgraded to enable the access device to support the internet application protocol, and thus the internet and the telecom network are converged, thereby providing a session service to an internet user.

## Claims

1. A method for a telecom network to provide a session service to an internet, wherein the method comprises:
upgrading an access-side device of the telecom network to support an internet application protocol, wherein the telecom network is connected with the internet via the access-side device, the telecom network is Internet Protocol Multimedia Subsystem, IMS, and comprises a Session Border Controller, SBC, a Proxy Call Session Control Function entity, P-CSCF, and a Serving Call Session Control Function entity, S-CSCF, the access-side device is the SBC, and the internet application protocol is Hypertext Markup Language 5, HTML5, protocol;
establishing, by an internet user, a session with a telecom user or another internet user through the telecom network;
wherein the establishing, by an internet user, a session with a telecom user or another internet user through the telecom network comprises: initiating, by the internet user, a session request, and/or, receiving, by the internet user, a session request;
wherein the initiating, by the internet user, a session request comprises: initiating (S701), by the internet user, a session request to the SBC under HTML5 protocol; forwarding (S702), by the SBC, the session request to the P-CSCF under the HTML5 protocol; encapsulating (S703), by the P-CSCF, the session request as a SIP message, and forwarding the SIP message to the S-CSCF; calling, by the S-CSCF, the telecom user or said another internet user, and returning a call success message;
wherein the receiving, by the internet user, a session request comprises: after receiving a call request directed to the internet user, forwarding (S801), by the S-CSCF, the call request to the P-CSCF corresponding to the internet user; converting (S802), by the P-CSCF, the call request in the format of INVITE into a call message of the HTML5 protocol and forwarding said call message to the SBC; transparently transmitting (S803), by the SBC, the call message of the HTML5 protocol to the internet user; and responsive to the call message, the internet user establishes a session with the telecom user or said another internet user who initiates the call request.

2. The method according to claim 1, wherein
the internet user establishes the session with the telecom user or said another internet
user using Real-Time Communication in WEB-browsers, RTCWeb, technology, a Session Initial Protocol Plugin, SIP Plugin, or the HTML5.

3. The method according to claim 1, wherein
the telecom network allocates a number or an identifier to the internet user, wherein the number or identifier allocated by the telecom network is different from a user name of the internet user in an internet application; or the user name of the internet user in the internet application is taken as the number or the identifier of the internet user in the telecom network, and
the internet user registers with the telecom network and/or initiates a session request using the number or identifier or the user name of the internet user in the internet application, and/or the internet user receives a session request, so as to establish the session with the telecom user or the another internet user.

4. The method according to claim 1, wherein
a number or an identifier of the internet user in the telecom network is associated with a user name of the internet user in an internet application, and
the telecom network calls an internet user terminal or a telecom terminal preferentially through service control, or the telecom network performs a forking call on the internet user terminal and the telecom terminal.

5. The method according to claim 1, wherein the operation that the internet user registers with the telecom network using the number or identifier comprises:
initiating, by the internet user, a registration request to the SBC under the HTML5 protocol;
forwarding, by the SBC, the registration request to the P-CSCF under the HTML5 protocol;
encapsulating, by the P-CSCF, the registration request as an SIP message, and forwarding the SIP message to a Serving Call Session Control Function entity,S-CSCF; and
completing, by the S-CSCF, the registration of the internet user, and returning a registration success message.

6. A system for a telecom network to provide a session service to an internet, wherein the system comprises the internet and the telecom network:
wherein the telecom network is an Internet Protocol Multimedia Subsystem, IMS and comprises a Session Border Controller, SBC, a Proxy Call Session Control Function entity, P-CSCF and a Serving Call Session Control Function entity, S-CSCF;
the internet is connected with the telecom network via an access-side device which has been upgraded to support an internet application protocol, the access-side device is the SBC and the internet application protocol is a Hypertext Markup Language 5, HTML5, protocol;
the telecom network is configured to provide a session service to an internet user, and establish a session between the internet user and a telecom user or between the internet user and another internet user;
wherein the SBC is configured to receive a session request initiated by the internet user under the HTML5 protocol, and forward the session request to the P-CSCF under the HTML5 protocol; the P-CSCF is configured to encapsulate the session request as Z a SIP message, and forward the SIP message to the S-CSCF; the S-CSCF is configured to call the telecom user or said another internet user, and return a call success message;
and/or,
wherein the S-CSCF is configured to forward, after receiving a call request directed to the internet user, the call request to the P-CSCF corresponding to the internet user; the P-CSCF is configured to convert the call request in the format of INVITE into a call message of the HTML5 protocol and to forward said call message to the SBC; the SBC is configured to transparently transmit the call message of the HTML5 protocol to the internet user.

7. The system according to claim 6, wherein
the internet user establishes the session with the telecom user or the another internet user through Real-Time Communication in WEB-browsers, RTCWeb, technology, a Session Initial Protocol Plugin (SIP Plugin), or the HTML5.

8. The system according to claim 6, wherein
the telecom network is further configured to allocate a number or an identifier to the internet user, wherein the number or identifier allocated by the telecom network is different from a user name of the internet user in an internet application; or, the user name of the internet user in the internet application is taken as the number or the identifier of the identifier of the internet user in the telecom network, and
the internet user registers with the telecom network and/or initiates a session request using the number or identifier or the user name of the internet user in the internet application, and/or the internet user receives a session request, to establish the session with the telecom user or the another internet user.

9. The system according to claim 6, wherein
the telecom network is configured to associate a number or an identifier of the internet user in the telecom network with a user name of the internet user in an internet application, and
the telecom network is configured to call an internet user terminal or a telecom terminal preferentially through service control, or perform a forking call on the internet user terminal and the telecom terminal.

## Patentansprüche

1. Verfahren für ein Telekommunikationsnetz zur Bereitstellung eines Sitzungsdienstes für das Internet, worin das Verfahren umfasst:
Aktualisieren einer zugangsseitigen Vorrichtung des Telekommunikationsnetzes, um ein Internetanwendungsprotokoll zu unterstützen, worin das Telekommunikationsnetz über die zugangsseitige Vorrichtung mit dem Internet verbunden ist, das Telekommunikationsnetz Internet-Protokoll-Multimedia-Subsystem, IMS, ist und einen Session Border Controller, SBC, eine Proxy Call Session Control Function-Einheit, P-CSCF, und eine Serving Call Session Control Function-Einheit, S-CSCF, umfasst, die zugangsseitige Vorrichtung der SBC ist und das Internetanwendungsprotokoll Hypertext Markup Language 5, HTML5,-Protokoll ist;
Herstellen, durch einen Internetnutzer, einer Sitzung mit einem Telekommunikationsnutzer oder einem anderen Internetnutzer über das Telekommunikationsnetz;
worin das Herstellen, durch einen Internetnutzer, einer Sitzung mit einem Telekommunikationsnutzer oder einem anderen Internetnutzer über das Telekommunikationsnetz umfasst: Einleiten, durch den Internetnutzer, einer Sitzungsanforderung und/oder Empfangen, durch den Internetnutzer, einer Sitzungsanforderung;
worin das Einleiten, durch den Internetnutzer, einer Sitzungsanforderung umfasst: Einleiten (S701), durch den Internetnutzer, einer Sitzungsanforderung an den SBC unter HTML5-Protokoll; Weiterleiten (S702), durch den SBC, der Sitzungsanforderung an die P-CSCF unter dem HTML5-Protokoll; Einkapseln (S703), durch die P-CSCF, der Sitzungsanforderung als SIP-Nachricht, und Weiterleiten der SIP-Nachricht an die S-CSCF; Anrufen, durch die S-CSCF, des Telekommunikationsnutzers oder des genannten anderen Internetnutzers, und Zurücksenden einer Anruferfolgsnachricht;
worin das Empfangen, durch den Internetnutzer, einer Sitzungsanforderung umfasst: nach dem Empfangen einer Anrufanforderung, die an den Internetnutzer gerichtet ist, Weiterleiten (S801), durch die S-CSCF, der Anrufanforderung an die P-CSCF, die dem Internetnutzer entspricht; Umwandeln (S802), durch die P-CSCF, der Anrufanforderung im Format von INVITE in eine Anrufnachricht des HTML5-Protokolls und Weiterleiten der Anrufnachricht an die SBC;
transparentes Senden (S803), durch die SBC, der Anrufnachricht des HTML5-Protokolls an den Internetnutzer; und in Erwiderung auf die Anrufnachricht, stellt der Internetnutzer eine Sitzung mit dem Telekommunikationsnutzer oder dem genannten anderen Internetnutzer, der die Anrufanforderung einleitet, her.

2. Verfahren nach Anspruch 1, worin
der Internetnutzer die Sitzung mit dem Telekommunikationsnutzer oder dem genannten anderen Internetnutzer unter Verwendung von Echtzeitkommunikation in WEB-Browsern, RTC-Web, Technologie, einem Session Initial Protocol Plugin, SIP Plugin, oder dem HTML5 herstellt.

3. Verfahren nach Anspruch 1, worin
das Telekommunikationsnetz dem Internetnutzer eine Zahl oder eine Kennung zuteilt, worin die Zahl oder die Kennung, die vom Telekommunikationsnetz zugeteilt werden, anders als ein Benutzername des Internetnutzers in einer Internetanwendung ist; oder der Benutzername des Internetnutzers in der Internetanwendung als die Zahl oder die Kennung des Internetnutzers im Telekommunikationsnetz genommen wird, und
der Internetnutzer sich beim Telekommunikationsnetz registrieren lässt und/oder eine Sitzungsanforderung unter Verwendung der Zahl oder der Kennung oder des Benutzernamens des Internetnutzers in der Internetanwendung einleitet, und/oder der Internetnutzer eine Sitzungsanforderung empfängt, so dass die Sitzung mit dem Telekommunikationsnutzer oder mit dem anderen Internetnutzer hergestellt wird.

4. Verfahren nach Anspruch 1, worin
eine Zahl oder eine Kennung des Internetnutzers im Telekommunikationsnetz einem Benutzernamen des Internetnutzers in einer Internetanwendung zugeordnet wird, und
das Telekommunikationsnetz ein Internetnutzerendgerät oder ein Telekommunikationsendgerät vorzugsweise über Dienststeuerung anruft, oder das Telekommunikationsnetz einen Verzweigungsanruf am Internetnutzerendgerät und am Telekommunikationsendgerät durchführt.

5. Verfahren nach Anspruch 1, worin der Vorgang, dass der Internetnutzer sich beim Telekommunikationsnetz unter Verwendung der Zahl oder der Kennung registrieren lässt, umfasst:
Einleiten, durch den Internetnutzer, einer Registrierungsanforderung an die SBC unter dem HTML5-Protokoll;
Weiterleiten, durch die SBC, der Registrierungsanforderung an die P-CSCF unter dem HTML5-Protokoll;
Einkapseln, durch die P-CSCF, der Registrierungsanforderung als SIP-Nachricht, und Weiterleiten der SIP-Nachricht an eine Serving Call Session Control Function-Einheit, S-CSCF; und
Vervollständigen, durch die S-CSCF, der Registrierung des Internetnutzers, und Zurücksenden einer Registrierungserfolgsnachricht.

6. System für ein Telekommunikationsnetz zur Bereitstellung eines Sitzungsdienstes für das Internet, worin das System das Internet und das Telekommunikationsnetz umfasst:
worin das Telekommunikationsnetz ein Internet-Protokoll-Multimedia-Subsystem, IMS, ist und einen Session Border Controller, SBC, eine Proxy Call Session Control Function-Einheit, P-CSCF, und eine Serving Call Session Control Function-Einheit, S-CSCF, umfasst;
das Internet mit dem Telekommunikationsnetz über eine zugangsseitige Vorrichtung verbunden ist, die aktualisiert wurde, um ein Internetanwendungsprotokoll zu unterstützen, die zugangsseitige Vorrichtung der SBC ist und das Internetanwendungsprotokoll ein Hypertext Markup Language 5, HTML5,-Protokoll ist;
das Telekommunikationsnetz dazu eingerichtet ist, einem Internetnutzer einen Sitzungsdienst bereitzustellen, und eine Sitzung zwischen dem Internetnutzer und einem Telekommunikationsnutzer oder zwischen dem Internetnutzer und einem anderen Internetnutzer herzustellen;
worin der SBC dazu eingerichtet ist, eine Sitzungsanforderung zu empfangen, die vom Internetnutzer unter dem HTML5-Protokoll eingeleitet wird, und die Sitzungsanforderung an die P-CSCF unter dem HTML5-Protokoll weiterzuleiten; die P-CSCF dazu eingerichtet ist, die Sitzungsanforderung als SIP-Nachricht einzukapseln, und die SIP-Nachricht an die S-CSCF weiterzuleiten; die S-CSCF dazu eingerichtet ist, den Telekommunikationsnutzer oder den genannten anderen Internetnutzer anzurufen, und eine Anruferfolgsnachricht zurückzusenden;
und/oder,
worin die S-CSCF dazu eingerichtet ist, nach dem Empfangen einer Anrufanforderung, die an den Internetnutzer gerichtet ist, die Anrufanforderung an die P-CSCF weiterzuleiten, die dem Internetnutzer entspricht; die P-CSCF dazu eingerichtet ist, die Anrufanforderung im Format von INVITE in eine Anrufnachricht des HTML5-Protokolls umzuwandeln und die Anrufnachricht an den SBC weiterzuleiten;
der SBC dazu eingerichtet ist, die Anrufnachricht des HTML5-Protokolls an den Internetnutzer transparent zu senden.

7. System nach Anspruch 6, worin
der Internetnutzer die Sitzung mit dem Telekommunikationsnutzer oder dem anderen Internetnutzer über Echtzeitkommunikation in WEB-Browsern, RTC-Web, Technologie, einen Session Initial Protocol Plugin (SIP Plugin), oder das HTML5 herstellt.

8. System nach Anspruch 6, worin
das Telekommunikationsnetz ferner dazu eingerichtet ist, dem Internetnutzer eine Zahl oder eine Kennung zuzuteilen, worin die Zahl oder die Kennung, die vom Telekommunikationsnetz zugeteilt werden, anders als ein Benutzername des Internetnutzers in einer Internetanwendung ist; oder der Benutzername des Internetnutzers in der Internetanwendung als die Zahl oder die Kennung des Internetnutzers im Telekommunikationsnetz genommen wird, und
der Internetnutzer sich beim Telekommunikationsnetz registrieren lässt und/oder eine Sitzungsanforderung unter Verwendung der Zahl oder der Kennung oder des Benutzernamens des Internetnutzers in der Internetanwendung einleitet, und/oder der Internetnutzer eine Sitzungsanforderung empfängt, um die Sitzung mit dem Telekommunikationsnutzer oder mit dem anderen Internetnutzer herzustellen.

9. System nach Anspruch 6, worin
das Telekommunikationsnetz dazu eingerichtet ist, eine Zahl oder eine Kennung des Internetnutzers im Telekommunikationsnetz einem Benutzernamen des Internetnutzers in einer Internetanwendung zuzuordnen, und
das Telekommunikationsnetz dazu eingerichtet ist, ein Internetnutzerendgerät oder ein Telekommunikationsendgerät vorzugsweise über Dienststeuerung anzurufen, oder einen Verzweigungsanruf am Intemetnutzerendgerät und am Telekommunikationsendgerät durchzuführen.

## Revendications

1. Procédé pour qu'un réseau de télécommunications fournisse un service de session à un internet, où le procédé comprend :
la mise à jour d'un dispositif côté accès du réseau de télécommunications pour supporter un protocole d'application internet, où le réseau de télécommunications est connecté à l'internet à travers le dispositif côté accès, le réseau de télécommunications est un sous-système multimédia de protocole internet, IMS, et comprend un contrôleur de limite de session SBC, une entité de fonction de commande de session d'appel mandataire P-CSCF, et une entité de fonction de commande de session d'appel de service S-CSCF, le dispositif côté accès est le SBC, et le protocole d'application internet est le protocole HTML5 de langage de balisage hypertexte 5 ;
l'établissement, par un internaute, d'une session avec un utilisateur de télécommunication ou un autre internaute à travers le réseau de télécommunications ;
où l'établissement, par un internaute, d'une session avec un utilisateur de télécommunication ou un autre internaute à travers le réseau de télécommunications comprend : le lancement, par l'internaute, d'une demande de session, et/ou la réception, par l'internaute d'une demande de session ;
où le lancement, par l'internaute, d'une demande de session comprend : le lancement (S701), par l'internaute, d'une demande de session au SBC sous le protocole HTML5 ; le transfert (S702), par le SBC, de la demande de session au P-CSCF sous le protocole HTML5 ; l'encapsulation (S703), par le P-CSCF, de la demande de session en tant que message SIP,
et le transfert du message SIP à la S-CSCF ; l'appel, par le S-CSCF, l'utilisateur de télécommunication ou ledit autre internaute, et le renvoi d'un message de réussite d'appel ;
où la réception, par l'internaute, d'une demande de session comprend : après la réception d'une demande d'appel dirigée vers l'internaute, le transfert (S801), par le S-CSCF, de la demande d'appel au P-CSCF correspondant à l'internaute ; la conversion (S802), par le P-CSCF, de la demande d'appel dans le format d'INVITATION en un message d'appel du protocole HTML5 et le transfert dudit message d'appel au SBC ;
la transmission de manière transparente (S803), par le SBC, du message d'appel du protocole HTML5 à l'internaute ; et en réponse au message d'appel, l'internaute établit une session avec l'utilisateur de télécommunication ou ledit autre internaute qui lance la demande d'appel.

2. Procédé selon la revendication 1, où
l'internaute établit la session avec l'utilisateur de télécommunication ou ledit autre internaute en utilisant une communication en temps réel dans des navigateurs WEB, RTCWeb, une technologie, un module d'extension de protocole initial de session, un module d'extension SIP ou le HTML5.

3. Procédé selon la revendication 1, où
le réseau de télécommunications attribue un numéro ou un identifiant à l'internaute, où le numéro ou l'identifiant attribué par le réseau de télécommunications est différent d'un nom d'utilisateur de l'internaute dans une application internet ; ou le nom d'utilisateur de l'internaute dans l'application internet est pris comme le numéro ou l'identifiant de l'internaute dans le réseau de télécommunications, et
l'internaute s'enregistre auprès du réseau de télécommunications et/ou lance une demande de session en utilisant le numéro ou l'identifiant ou le nom d'utilisateur de l'internaute dans l'application internet, et/ou l'internaute reçoit une demande de session, de manière à établir la session avec l'utilisateur de télécommunication ou l'autre internaute.

4. Procédé selon la revendication 1, où
un numéro ou un identifiant de l'internaute dans le réseau de télécommunications est associé à un nom d'utilisateur de l'internaute dans une application internet, et
le réseau de télécommunications appelle un terminal d'internaute ou un terminal de télécommunications de préférence à travers une commande de service, ou le réseau de télécommunications effectue un appel de bifurcation sur le terminal d'internaute et le terminal de télécommunications.

5. Procédé selon la revendication 1, où l'opération que l'internaute enregistre auprès du réseau de télécommunications en utilisant le numéro ou l'identifiant comprend :
le lancement, par l'internaute, d'une demande d'enregistrement auprès du SBC sous le protocole HTML5 ;
le transfert, par le SBC, de la demande d'enregistrement au P-CSCF sous le protocole HTML5 ;
l'encapsulation, par le P-CSCF, de la demande d'enregistrement en tant que message SIP, et le transfert du message SIP à une entité de fonction de commande de session d'appel de service, S-CSCF ; et
la réalisation, par le S-CSCF, de l'enregistrement de l'internaute, et le renvoi d'un message de réussite d'enregistrement.

6. Système pour un réseau de télécommunications pour fournir un service de session à un internet, où le système comprend l'internet et le réseau de télécommunications :
où le réseau de télécommunications est un sous-système multimédia de protocole internet IMS et comprend un contrôleur de limite de session SBC, une entité de fonction de commande de session d'appel mandataire P-CSCF et une entité de fonction de commande de session d'appel de service S-CSCF ;
l'internet est connecté au réseau de télécommunications à travers un dispositif côté accès qui a été mis à jour pour prendre en charge un protocole d'application internet, le dispositif côté accès est le SBC et le protocole d'application internet est un protocole HTML5 de langage de balisage hypertexte 5 ;
le réseau de télécommunications est configuré pour fournir un service de session à un internaute, et établir une session entre l'internaute et un utilisateur de télécommunication ou entre l'internaute et un autre internaute ;
où le SBC est configuré pour recevoir une demande de session initiée par l'internaute sous le protocole HTML5, et transférer la demande de session au P-CSCF sous le protocole HTML5 ; le P-CSCF est configuré pour encapsuler la demande de session sous la forme d'un message SIP, et transférer le message SIP au S-CSCF ; le S-CSCF est configuré pour appeler l'utilisateur de télécommunication ou ledit autre internaute, et renvoyer un message de réussite d'appel ; et/ou,
où le S-CSCF est configuré pour transférer, après la réception d'une demande d'appel dirigée vers l'internaute, la demande d'appel au P-CSCF correspondant à l'internaute ; le P-CSCF est configuré pour convertir la demande d'appel dans le format d'INVITATION en un message d'appel du protocole HTML5 et pour transférer ledit message d'appel au SBC ;
le SBC est configuré pour transmettre de manière transparente le message d'appel du protocole HTML5 à l'internaute.

7. Système selon la revendication 6, où
l'internaute établit la session avec l'utilisateur de télécommunication ou l'autre internaute par communication en temps réel dans des navigateurs WEB, RTCWeb, une technologie, un module d'extension de protocole initial de session (module d'extension SIP) ou le HTML5.

8. Système selon la revendication 6, où
le réseau de télécommunications est en outre configuré pour attribuer un numéro ou un identifiant à l'internaute, où le numéro ou l'identifiant attribué par le réseau de télécommunications est différent d'un nom d'utilisateur de l'internaute dans une application internet ; ou, le nom d'utilisateur de l'internaute dans l'application internet est pris comme le numéro ou l'identifiant de l'identifiant de l'internaute dans le réseau de télécommunications, et
l'internaute s'enregistre auprès du réseau de télécommunications et/ou lance une demande de session en utilisant le numéro ou l'identifiant ou le nom d'utilisateur de l'internaute dans l'application internet, et/ou l'internaute reçoit une demande de session, pour établir la session avec l'utilisateur de télécommunication ou l'autre internaute.

9. Système selon la revendication 6, où
le réseau de télécommunications est configuré pour associer un numéro ou un identifiant de l'internaute dans le réseau de télécommunications à un nom d'utilisateur de l'internaute dans une application internet, et
le réseau de télécommunications est configuré pour appeler un terminal d'internaute ou un terminal de télécommunications de préférence à travers une commande de service, ou pour effectuer un appel de bifurcation sur le terminal d'internaute et le terminal de télécommunications.
